(19) Europäisches Patentamt
European Patent Office
Office européen des brevets

(11) Veröffentlichungsnummer: **0 055 224**
**A2**

(12) **EUROPÄISCHE PATENTANMELDUNG**

(21) Anmeldenummer: **81810511.6**

(22) Anmeldetag: **21.12.81**

(51) Int. Cl.³: **D 01 F 1/06**, C 09 B 44/10, C 09 B 69/06

(30) Priorität: **24.12.80 CH 9575/80**

(43) Veröffentlichungstag der Anmeldung: **30.06.82 Patentblatt 82/26**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Loew, Peter, Dr., Concordiastrasse 23, CH-4142 Münchenstein (CH)**

(54) **Verfahren zum Spinnfärben von Polymeren oder Mischpolymeren des Acrylnitrils.**

(57) Verfahren zum Spinnfärben von Polymeren des Acrylnitrils oder Mischpolymeren mit überwiegendem Acrylnitrilanteil, dadurch gekennzeichnet, dass man der Spinnlösung ein monokationisches Farbsalz der Formel

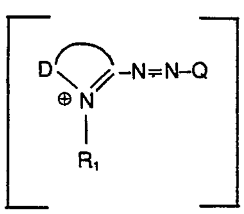

$BF_4^{\ominus}$

zusetzt, worin D die zur Schliessung des 5gliedrigen zwei N-Atome enthaltenden Heteroringes oder eines 6gliedrigen Heteroringes, die gegebenenfalls annellierte Benzolringe enthalten können oder eines Benzthiazolringes erforderliche Atomgruppierung, und Q den Rest einer carbocyclischen oder heterocyclischen aromatischen Kupplungskomponente bedeuten. Man erhält gelb-rot gefärbte transparente Fasern mit ausgezeichneten Echtheiten.

EP 0 055 224 A2

ACTORUM AG

CIBA-GEIGY AG
Basel (Schweiz)

3-13228 /=

# Verfahren zum Spinnfärben von Polymeren oder Mischpolymeren des Acrylnitrils

Es ist aus der DE-AS 2.433.233 und der GB-PA 2.022.099 bekannt, dass man Polyacrylnitril mit Bortetrafluorboraten basischer Azofarbstoffe, die als Diazokomponente einen quaternierten Triazolrest enthalten, spinnfärben kann.

Es wurde nun gefunden, dass sich Polymere des Acrylnitrils hervorragend färben lassen, wenn man der Spinnlösung ein monokationisches Farbsalz der Formel

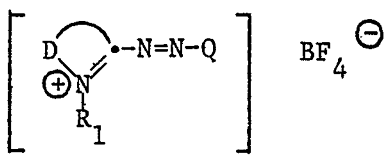

zusetzt, worin D die zur Schliessung eines 5-gliedrigen zwei N-Atome enthaltenen Heteroringes oder eines 6-gliedrigen Heteroringes die gegebenenfalls annellierte Benzolringe enthalten können oder eines Benzthiazolringes erforderliche Atomgruppierung, und Q den Rest einer carbocylischen oder heterocyclischen aromatischen Kupplungskomponente und $R_1$ Alkyl, Aralkyl oder Aryl bedeutet.

In den erfindungsgemäss zu verwendenden Farbsalzen der Formel (I) bedeutet D vorzugsweise die zur Schliessung eines Pyrazol-, Benzpyrazol-, Imidazol-, Benzimidazol- oder Benzthiazolringes erforderliche Atomgruppierung.

Aus der Pyrazolreihe seien insbesondere die Reste der Formel

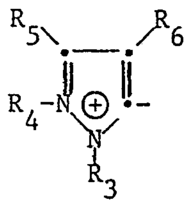

genannt, worin $R_3$ und $R_4$ gegebenenfalls durch OH, Chlor, oder $CONH_2$ substituiertes $C_1$-$C_4$-Alkyl oder gegebenenfalls durch Chlor, Methyl oder $C_1$-$C_2$-Alkoxy substituiertes Phenyl, $R_5$ und $R_6$ H, $C_1$-$C_4$-Alkyl oder Phenyl oder $R_5$ und $R_6$ einen ankondensierten Benzolring bedeuten. Als Beispiele seien genannt die Reste der Formeln:

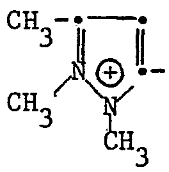 , 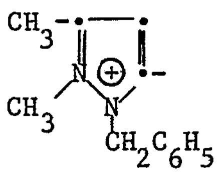 , 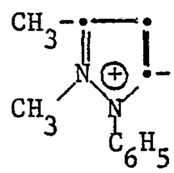 , 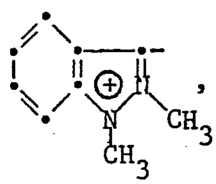 ,

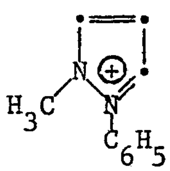 oder 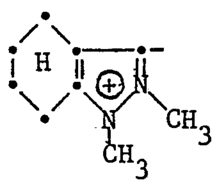

Aus der Imidazolreihe sei insbesondere der Rest der Formel

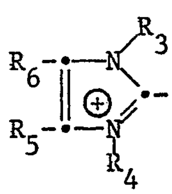

genannt, worin $R_3$ bis $R_6$ die oben angegebene Bedeutung haben.

Als Beispiel seien die Reste der Formeln

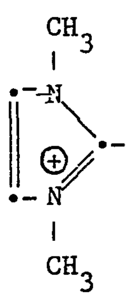 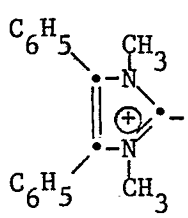 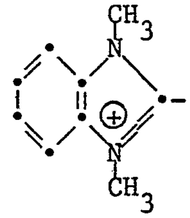

genannt.

Schliesslich kann D auch einen Benzthiazolrest bedeuten. Dieser kann im Benzolrest beispielsweise durch Chlor, Methyl, $C_1$-$C_2$-Alkoxy, oder Acylamino substituiert sein. Bevorzugt ist der Rest der Formel

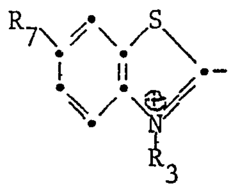

worin $R_3$ die angegebene Bedeutung, $R_7$ H, Chlor, Methyl, $C_1$-$C_2$-Alkoxy oder $C_2$-$C_4$-Alkanoylamino bedeuten.

Als Beispiele seien die folgenden Reste aufgeführt:

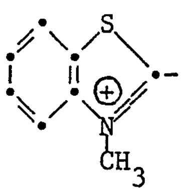 , 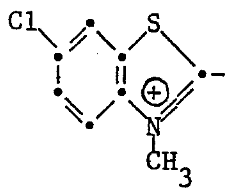 , 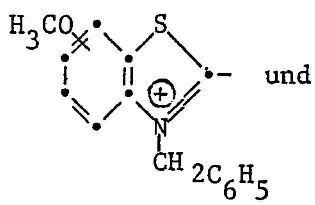 und 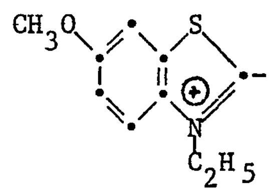 .

Aus der Reihe der 6-gliedrigen Heterocyclen seien beispielsweise die Pyridine, Chinoline oder Pyrimidine genannt. Bevorzugt sind die Pyridin- oder Chinolinreste der Formeln

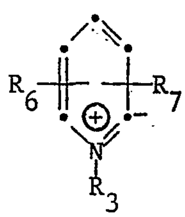

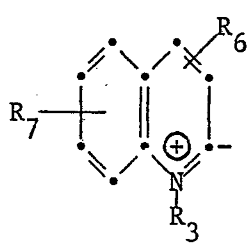

worin $R_3$ die angegebene Bedeutung hat, $R_6$ und $R_7$ H, Chlor, Methyl, Aethyl oder $C_1$-$C_2$-Alkoxy bedeuten. Als Beispiele seien genannt die Reste der Formeln

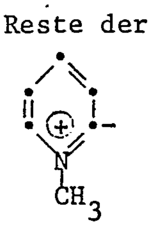

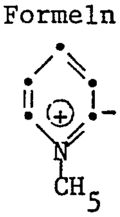

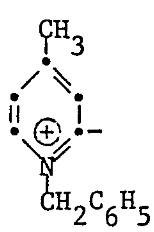

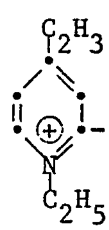

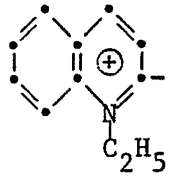

Steht Q für den Rest einer carbocyclischen Kupplungskomponente, dann beispielsweise für einen 4-Aminonaphthalinrest, vorzugsweise aber für einen Phenylrest, insbesondere einen Rest der Formel

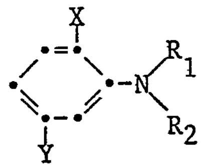

worin $R_1$ H, gegebenenfalls durch Hydroxy, $C_1$-$C_2$-Alkoxy, $C_1$-$C_4$-Alkanoyloxy, oder Cyan substituiertes $C_1$-$C_4$-Alkyl, Cyclohexyl oder Benzyl oder gegebenenfalls durch Chlor, Methyl oder $C_1$-$C_2$-Alkoxy substituiertes Phenyl, $R_2$ H, gegebenenfalls durch Hydroxy, $C_1$-$C_2$-Alkoxy, $C_1$-$C_4$-Alkanoyloxy, oder Cyan substituiertes $C_1$-$C_4$-Alkyl, Cyclohexyl oder Benzyl, X und Y H, Methyl oder $C_1$-$C_2$-Alkoxy bedeuten oder worin $R_1$ und $R_2$ zusammen mit dem N-Atom einen 5- oder 6-gliedrigen Ring bilden, der gegebenenfalls noch weitere N- oder O-Atome enthalten kann.

Als Beispiele seien die Reste des
Anilin,
N-Methylanilin,
N-Aethylanilin,
N,N-Dimethylanilin,
N,N-Diäthylanilin,
N-Isobutylanilin,
N,N-Di-n-butylanilin,
N-Methyl-N-benzylanilin,
N,N-Dibenzylanilin,
N-Aethyl-N-β-acetoxyäthylanilin,
N,N-Bis-β-acetoxyäthylanilin,
N,N-Bis-β-cyanäthylanilin,
N-Methyl-n-phenylanilin
N-Methyl-N-p-methoxyphenylanilin und
N-Aethyl-N-hydroxyäthylanilin
genannt.

Steht Q für einen heterocyclischen Rest, dann vorzugsweise für einen Indolrest, insbesondere einem solchen der Formel

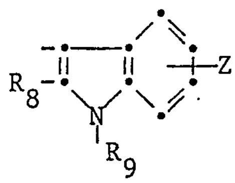

worin $R_8$ $C_1$-$C_4$-Alkyl oder Phenyl, $R_9$ H, $C_1$-$C_4$-Alkyl oder Cyanäthyl und Z H, Chlor, Methyl oder $C_1$-$C_2$-Alkoxy bedeuten.

Als Beispiele seine die Reste des 2-Methylindol-3-, 1,2-Dimethylindol-3-, 2-Phenylindol-3-, 1-Methyl-2-phenylindol-3-, 1-Butyl-2-methylindol-3-, 1-Cyanäthyl-2-methylindol-3-, 5-Chlor-, 5-Methyl- oder 5-Methoxy-2-phenylindol-3- genannt.

Die Tetrafluorborate erhält man zweckmässig durch Umsetzen eines Farbsalzes der Formel

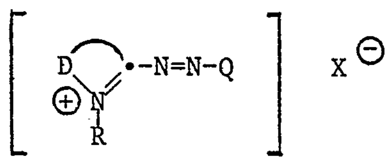

worin D, Q und R die angegebene Bedeutung haben und $X^{\ominus}$ ein wasserlöslichmachendes Anion bedeutet, mit Natriumtetrafluorborat. Als wasserlöslichmachende Anionen dienen vorzugsweise die Chloride, Bromide, Sulfate, Methylsulfate oder Acetate.Dank ihrer Schwerlöslichkeit fallen die Tetrafluoroborate aus. Die Ausgangssalze stellen bekannte Verbindungen dar.

Für die Anwendung werden die erfindungsgemässen Farbsalze zweckmässig in dem zum Lösen des Polyacrylnitrils verwendeten Lösungsmittel, wie Dimethylformamid, Dimethylacetamid oder Dimethylsulfoxid, gelöst, dann der Spinnlösung zugegeben, das Gemisch homogenisiert und dann in der üblichen Weise, wie beispielsweise nach dem Trocken-Spinnverfahren, oder nach dem Nass-Spinn-Verfahren, verspinnt und die so hergestellten Fasern wie üblich behandelt.

Die erfindungsgemässen Farbsalze besitzen in den genannten Lösungsmitteln bereits bei Raumtemperatur eine sehr hohe Löslichkeit, so dass sie vorteilhaft auch in Form von konzentrierten Lösungen, die vorzugsweise etwa 5 bis 40 Gew.% Farbstoff enthalten, eingesetzt werden können, wobei durch Temperaturerhöhung die Löslichkeit der Farbstoffe nochmals beträchtlich gesteigert werden kann. Zudem besitzen sie dank des relativ kleinen Anions eine hohe Farbstärke, was ein ökonomisches Färben erlaubt.

Ausser den Polymeren des Acrylnitrils kommen als zu verspinnendes Substrat Mischpolymerisate des Acrylnitrils mit anderen Vinyl-Verbindungen, wie beispielsweise mit Vinylchlorid, Vinylfluorid, Vinylidenchlorid, Vinylacetat oder -propionat, Vinylpyridin, Vinylimidazol, Vinylpyrrolidon, Vinylalkohol, Acryl- oder Methacrylsäureestern oder Acrylamin in Betracht, wobei diese Mischpolymerisate mindestens 70 Gew.% an Acrylnitril aufweisen müssen und weiterhin saure Gruppen enthalten, die als Endgruppen in das Polymere mittels eines Katalysators eingeführt und mittels solche saure Gruppen enthaltenden Comonomeren einpolymerisiert oder aufgepfropft wurden.

Nach dem erfindungsgemässen Verfahren erhält man völlig transparente, stippenfreie Spinnlösungen, die keine Verstopfung oder mechanische Abnutzung der Spinndüsen verursachen. Die beim Verspinnen erhaltenen Fäden bzw. Fasern zeigen durch die weitgehend molekulardisperse Verteilung des erfindungsgemäss verwendeten Farbstoffes im Gegensatz zu den zur Zeit meistens eingesetzten Farbpigmenten keine Mattierungserscheinungen. Weiterhin besitzen die mit dem erfindungsgemäss verwendeten Farbstoffe gemäss dem erfindungsgemässen Verfahren gefärbten Materialien eine sehr hohe Nassechtheit. Durch das Fehlen von Farbstoff-Aggregaten an den Faseroberflächen, wie sie beim Spinnfärben mit Farbpigmenten auftreten können, besitzen die erfindungsgemäss erhaltenen Fasern ebenfalls eine ausserordentlich gute Reibechtheit. Ausserdem ist allgemein die ausgezeichnete Thermofixierechtheit, Dämpf- und Wasch- und Lichtechtheit der so gefärbten Fasern hervorzuheben.

Da die erfindungsgemäss verwendeten Tetrafluorborat-Farbstoffsalze sich aus den wässrigen Lösungen wie sie bei der Farbstoffsynthese entstehen, sehr gut in grobkristalliner Form und weitgehend salzfrei abscheiden lassen, hat die Verwendung von Spinnlösungen, die diese Farbstoffe enthalten, den besonderen Vorteil, dass anorganische Begleitsalze in den als Spinnflüssigkeit verwendeten aprotischen Lösungsmitteln vor dem Verspinnen nicht erst abgetrennt werden müssen, so dass insbesondere zusätzliche verfahrenstechnische Massnahmen vermieden werden. Die überraschend geringe Wasserlöslichkeit der erfindungsgemässen Farbsalze ist ein weiterer Vorteil im Hinblick auf das Ausbluten des Farbsalzes im wässrigen Fällbad.

Beispiel 1: Zu 100 Teilen einer 30%igen Lösung eines sauermodifizierten Polyacrylnitrils in Dimethylformamid werden 5 Teile einer 5%igen Lösung des Farbsalzes der Formel

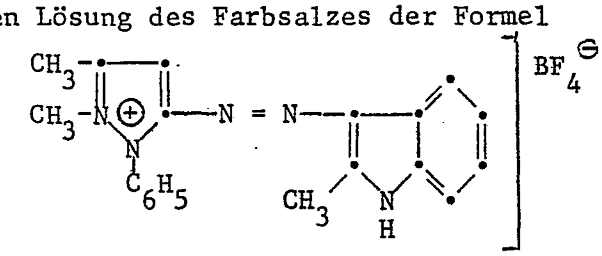

in Dimethylformamid gegeben. Die zu verspinnende Lösung wird homogenisiert und nach einem in der Technik üblichen und bekannten Trockenspinnverfahren versponnen.

Man erhält Fäden in einem kräftigen Gelbton, welche sich zusätzlich durch einen hohen Glanz auszeichnen. Die Echtheiten, insbesondere die Lichtechtheit, Reibechtheit, Thermofixierechtheit, Waschechtheit und Dämpfechtheit sind ausserordentlich hoch.

Führt man die Faserherstellung nach einem in der Technik üblichen Nass-Spinnverfahren durch, erhält man gefärbte Fäden von gleich guten Eigenschaften. Die Fäll- und Verstreckbäder werden nur äusserst geringfügig angefärbt.

Beispiel 2: Das im Beispiel 1 verwendete Farbsalz kann wie folgt erhalten werden:

290 g des Farbstoffes der Formel

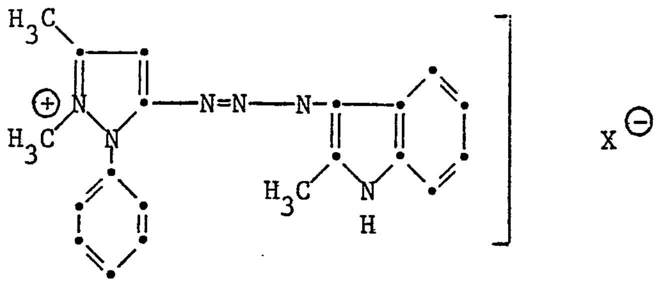

($X=SO_4CH_3$) werden in 2200 ml wässriger Essigsäure gelöst und zu 104 g $NaBF_4$ in 900 ml Wasser zugetropft. Das ausgefallene Produkt ($X=BF_4$) wird abfiltriert, mit Wasser gewaschen und getrocknet. Man erhält 258 g eines in Wasser schwer löslichen gelben Pulvers.

Beispiele 3-20: In der nachfolgenden Tabelle sind die Tetrafluorborate weiterer Farbstoffkationen aufgeführt, die nach dem im Beispiel 1 beschriebenen Verfahren zur Spinnfärbung von PAN verwendet wurden. Kolonne 3 gibt die Nuance der gefärbten Faser.

Tabelle

| Bsp. | Kation | Nuance |
|---|---|---|
| 3 | 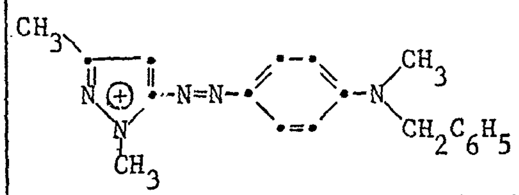 | orange |
| 4 | 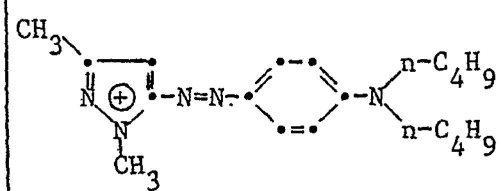 | rot |
| 5 | 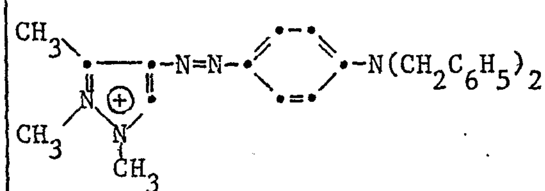 | orange |
| 6 | 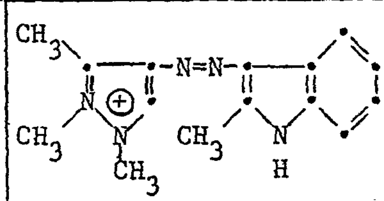 | gelb |
| 7 | 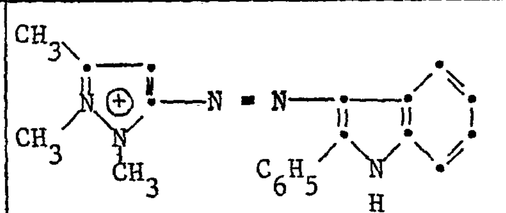 | gelb |
| 8 | 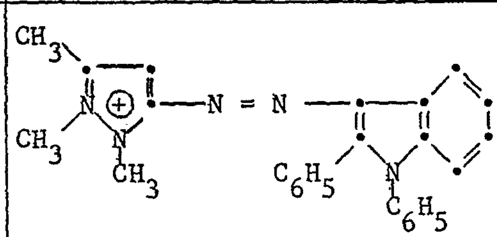 | gelb |
| 9 | 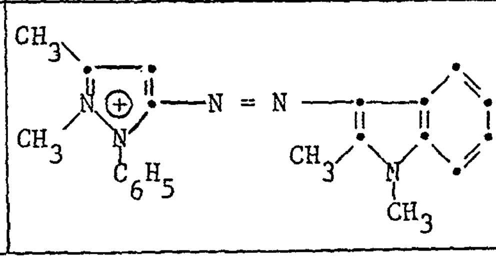 | gelb |

Tabelle (Fortsetzung

| Bsp. | Kation | Nuance |
|---|---|---|
| 10 | 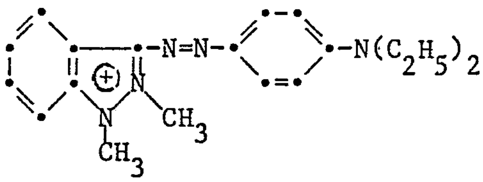 | violett |
| 11 | 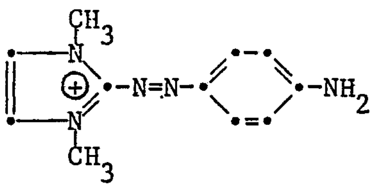 | orange |
| 12 | 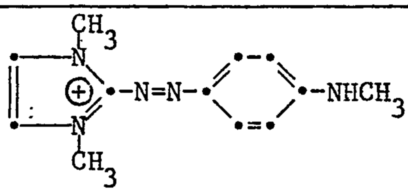 | scharlach |
| 13 | 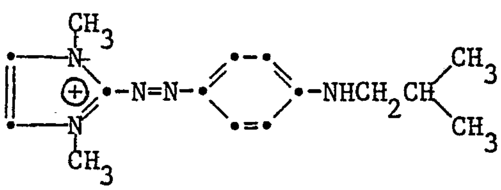 | scharlach |
| 14 | 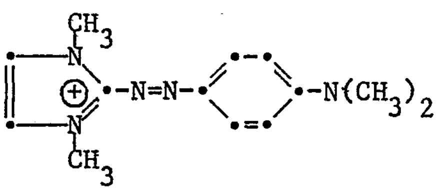 | rot |
| 15 | 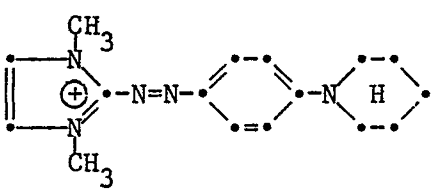 | rot |
| 16 | 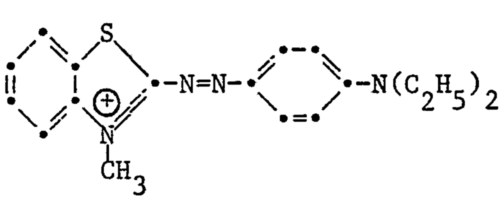 | blau |

Tabelle (Fortsetzung)

| Bsp. | Kation | Nuance |
|---|---|---|
| 17 | 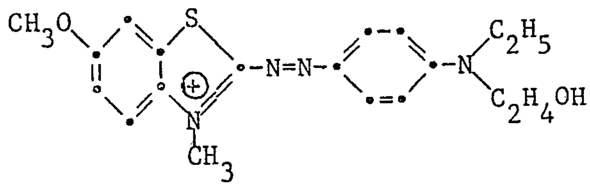 | blau |
| 18 | 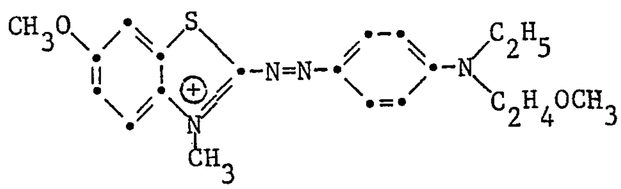 | blau |
| 19 | 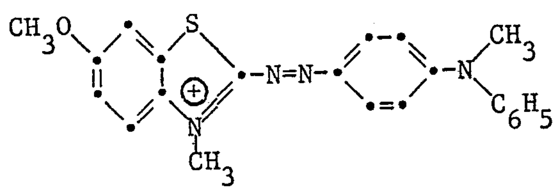 | blau |
| 20 | 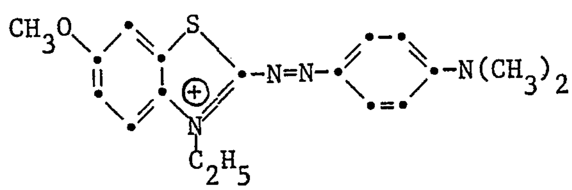 | blau |

Patentansprüche

1. Verfahren zum Spinnfärben von Polymeren des Acrylnitrils oder Mischpolymeren mit überwiegendem Acrylnitrilanteil, dadurch gekennzeichnet, dass man der Spinnlösung ein monokationisches Farbsalz der Formel

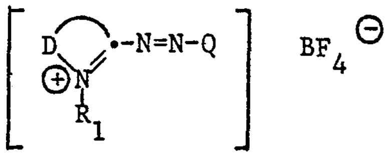

zusetzt, worin D die zur Schliessung des 5-gliedrigen zwei N-Atome enthaltenen Heteroringes oder eines 6-gliedrigen Heteroringes, die gegebenenfalls annellierte Benzolringe enthalten können oder eines Benzthiazolringes erforderliche Atomgruppierung, und Q den Rest einer carbocyclischen oder heterocyclischen aromatischen Kupplungskomponente bedeuten, und $R_1$ Alkyl, Aralkyl oder Aryl bedeutet.

2. Verfahren gemäss Anspruch 1, dadurch gekennzeichnet, dass D die zur Schliessung eines Pyrazol- oder Imidazolringes erforderliche Atomgruppierung bedeutet.

3. Verfahren gemäss Anspruch 1, dadurch gekennzeichnet, dass D die zur Schliessung eines Benzthiazolringes erforderliche Atomgruppierung bedeutet.

4. Verfahren gemäss Anspruch 1, gekennzeichnet durch die Verwendung eines Farbsalzes der Formel

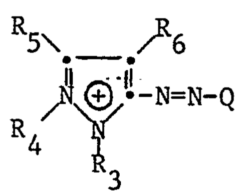

worin $R_3$ und $R_4$ gegebenenfalls substituiertes $C_1$-$C_4$-Alkyl, Benzyl oder gegebenenfalls durch Chlor, Methyl oder $C_1$-$C_2$-Alkoxy substituiertes

Phenyl, $R_5$ und $R_6$ H, $C_1$-$C_4$-Alkyl oder Phenyl bedeuten, oder $R_5$ und $R_6$ einen ankondensierten Benzolring bedeuten.

5. Verfahren gemäss Anspruch 1, gekennzeichnet durch die Verwendung eines Farbsalzes der Formel

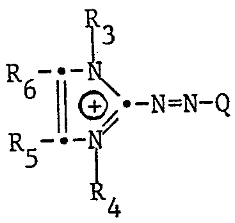

worin $R_3$ bis $R_6$ die im Anspruch 3 angegebene Bedeutung haben.

6. Verfahren gemäss Anspruch 1, gekennzeichnet durch die Verwendung eines Farbsalzes der Formel

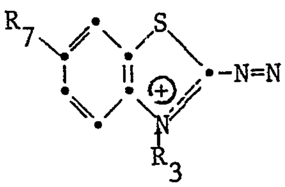

worin $R_3$ die im Anspruch 4 und Q die im Anspruch 1 angegebene Bedeutung haben, $R_7$ H, Chlor, Methyl, $C_1$-$C_2$-Alkoxy oder $C_1$-$C_4$-Alkanoylamino bedeuten.

7. Verfahren gemäss Anspruch 1, dadurch gekennzeichnet, dass Q einen Rest der Formel

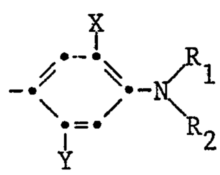

bedeutet, worin $R_1$ H, gegebenenfalls durch Hydroxy, $C_1$-$C_2$-Alkoxy, $C_1$-$C_4$-Alkanoyloxy, oder Cyan substituiertes $C_1$-$C_2$-Alkyl, Cyclohexyl oder Benzyl oder gegebenenfalls durch Chlor, Methyl oder $C_1$-$C_2$-Alkoxy substituiertes Phenyl, $R_2$ H gegebenenfalls durch Hydroxy, $C_1$-$C_2$-Alkoxy, $C_1$-$C_4$-Alkanoyloxy, oder Cyan substituiertes $C_1$-$C_2$-Alkyl, Cyclohexyl, oder Benzyl, X und Y H, Methyl oder $C_1$-$C_2$-Alkoxy bedeuten oder worin $R_1$ und $R_2$ zusammen mit dem N-Atom einen 5- oder 6-gliedrigen Ring bilden, der gegebenenfalls noch weitere N- oder O-Atome enthalten kann.

8. Verfahren gemäss Anspruch 1, dadurch gekennzeichnet, dass Q einen Rest der Formel

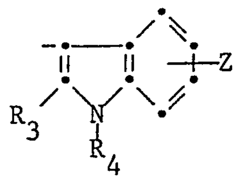

bedeutet, worin $R_3$ $C_1$-$C_4$-Alkyl oder Phenyl, $R_4$ H, $C_1$-$C_4$-Alkyl oder Cyanäthyl und Z H, Chlor, Methyl oder $C_1$-$C_2$-Alkoxy bedeuten.

9. Spinngefärbte Fasern von Polymeren des Acrylnitrils oder Mischpolymeren mit überwiegendem Acrylnitrilanteil enthaltend ein Farbsalz gemäss Anspruch 1.